# EUROPEAN PATENT APPLICATION

(11) **EP 3 524 806 A1**
(43) Date of publication of application: **14.08.2019**
(21) Application number: 18213924.6
(22) Date of filing: 19.12.2018
(51) Int. Cl.: F02K 1/12, F02K 1/82

(54) **AIRCRAFT NOZZLE**

(30) Priority: 19.01.2018 GB 201800856
(71) Applicant: Rolls-Royce plc, London SW1E 6AT (GB)
(72) Inventor: Colebrooke, Jack, Derby, Derbyshire DE24 8BJ (GB); Steele, David, Derby, Derbyshire DE24 8BJ (GB)
(74) Representative: Rolls-Royce plc

(57) **Abstract**

There is disclosed a flap (50) for a variable area exhaust nozzle (20) of a gas turbine engine (10). The flap comprises a support structure (31) and a gas shield (32) retained thereto. The support structure and the gas shield comprise a pair of grooves (37, 402) extending in a longitudinal direction of the flap and a pair of corresponding tongues (36, 401) that engage the pair of grooves so as to retain the gas shield to the support structure and to allow movement of the gas shield by thermal expansion along the support structure in the longitudinal direction.

## Description

The technology described herein concerns an aircraft nozzle and, more particularly, an exhaust nozzle flap for a gas turbine engine.

Gas turbine engines used in some aircraft include exhaust systems that have variable area exhaust nozzles. Variable area exhaust nozzles may include articulated flaps, or petals, that are movable with respect to one another to vary the area of the exhaust nozzles both to control the engine operating conditions and to optimise the propulsion of the aircraft.

A conventional flap for a variable area exhaust nozzle comprises a monolithic or fabricated gas shield having a backbone which is integrally fixed and connected thereto. The gas shield may be pivotable at one end about a static wall of the engine or the end of another flap of the variable area exhaust nozzle. The backbone may be connected to an actuator arm of the gas turbine engine for selectively varying the position of the gas shield.

The gas shield is typically in the form of a panel having a gas flowpath surface that is exposed to hot combustion gases in an exhaust stream of the nozzle, and a backside surface (which includes the backbone) that is in a cooler environment. This temperature differential across both surfaces can cause failure, such as a fracture at the connection between the gas shield and the backbone, of the flap due to strain caused by thermal expansion of the gas shield relative to the backbone.

While it is known to increase the thickness of the overall flap in order to increase its resilience to thermal strain, this has the disadvantage of increasing the overall weight of the flap and its cost of manufacture. Therefore, other arrangements have been developed to increase the resilience of a flap to thermal strain. In particular, it is known to provide a segmented flap design. For example, it is known to provide a gas shield comprising a plurality of interlocking segments that are (immovably) fixed to the backbone in use.

A disadvantage of such a design is that the number of parts, and therefore the assembly time and risk of losing one or more parts during operation, increases.

Alternative variable area exhaust nozzles for gas turbine engines therefore remain an area of interest.

According to a first aspect, there is provided a flap for a variable area exhaust nozzle of a gas turbine engine, comprising a support structure and a gas shield retained thereto; wherein the support structure and the gas shield comprise a pair of grooves extending in a longitudinal direction of the flap and a pair of corresponding tongues that engage the pair of grooves so as to retain the gas shield to the support structure and to allow movement of the gas shield by thermal expansion along the support structure in the longitudinal direction.

The support structure may be any suitable structure for supporting (e.g. bearing the weight of) the gas shield. The support structure may be connectable to an actuator (or strut) of the variable area exhaust nozzle.

The gas shield may be any suitable or desired element of the exhaust nozzle that is suitable for shielding the support structure (and/or other elements of the nozzle) from exhaust gases. The gas shield may accordingly comprise a flowpath surface that is to be exposed (during operation) to hot combustion gases in an exhaust stream of the variable area nozzle and a shielded surface on the other side of the gas shield to the flowpath surface.

The gas shield is (e.g. slidingly) movable along the support structure by thermal expansion, e.g. caused by exposure of the gas shield to the high temperature exhaust gases during operation of the gas turbine engine. In an embodiment the flowpath surface of the gas shield is movable or (e.g. slidingly) expandable along the support structure.

The gas shield may be movable along some or substantially the entire length of the support structure (in the longitudinal direction).

The gas shield may be movable along (e.g. on) a surface of the support structure.

The pair of grooves may be formed on the gas shield and the pair of corresponding tongues may be formed on the support structure. Alternatively, the pair of grooves may be formed on the support structure and the pair of corresponding tongues may be formed on the gas shield.

The pair of grooves and the pair of tongues may be configured to restrict movement of the gas shield in a transverse direction. For example, the placement and orientation of the tongue and groove pairs may be configured such that the gas shield is restricted in the transverse direction.

The gas shield may comprise a first end and a second end which is opposite to the first end in the longitudinal direction; the first end may be secured (e.g. fixed) to the support structure and the second end may be movable by thermal expansion along the support structure (e.g. the in the longitudinal direction.

The gas shield may be removably secured to the support structure at the first end. For example, the gas shield may be removably secured to the support structure by a pin and bolt arrangement or by a retaining clip.

Substantially all or only a part of the gas shield may be movable, e.g. slideable, (by thermal expansion) along the support structure.

The flap may comprise one or more bearings (such as ball bearings or rolling elements) between the support structure and the gas shield. This may be advantageous to reduce friction and thus wear between the support structure and gas shield.

The flap may comprise one or more ribs connected to the gas shield for increasing the stiffness of the gas shield. The rib may be attached to the gas shield or may be integral thereto, e.g. in the form of one or more ridges on the surface of the gas shield. The one or more ribs may extend along a transverse direction of the gas shield, e.g. to further restrict movement of the gas shield (by thermal expansion) in the transverse direction.

The gas shield may comprise a plurality of cooling holes extending through the gas shield from a shielded surface to a flowpath surface, wherein the cooling holes are configured to allow cooling fluid to flow therethrough from the shielded surface of the gas shield to the flowpath surface.

The flap may comprise a single gas shield. Additionally or alternatively, the gas shield may be formed of a single piece of material. This may reduce the complexity of the flap and increase ease of manufacture and/or replacing the gas shield compared to, e.g., segmented flap arrangements.

Although the technology described herein has been described with respect to the flap itself, it will be appreciated that the technology described herein is applicable more widely to the exhaust nozzle itself.

Thus according to an aspect of the technology described herein there is provided a variable area exhaust nozzle for a gas turbine engine, comprising a flap in accordance with any one of the above statements.

The technology described herein also extends to the gas turbine engine itself. Thus according to an aspect of the technology described herein there is provided a gas turbine engine comprising a flap in accordance with any one of the above statements or a variable area exhaust nozzle in accordance with any one of the above statements.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a cross-sectional view of a gas turbine engine that includes a variable area exhaust nozzle adapted to adjust various flow streams as they exit the engine;
**Figure 3** shows two views of a nozzle flap in accordance with an embodiment of the technology described herein;
**Figure 4** shows two views of a nozzle flap in accordance with another embodiment of the technology described herein; and
**Figure 5** is a cross-sectional view of a nozzle flap in accordance with an embodiment of the technology described herein.

In the Figures, like reference numerals are used to refer to like features, where appropriate.

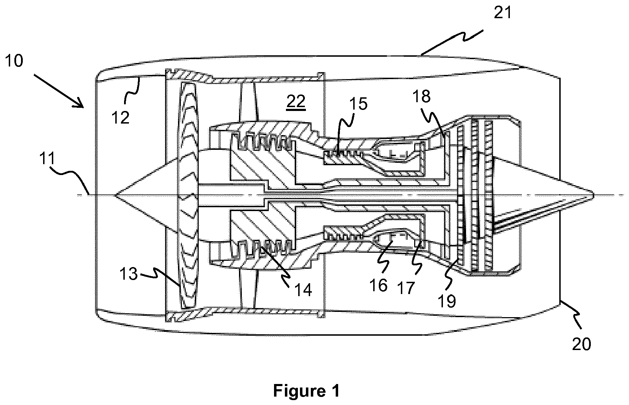

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and at least part of the exhaust nozzle 20.

The gas turbine engine 10 works in the conventional manner so that air entering the intake 12 is accelerated by the fan 13 to produce two air flows: a first air flow into the engine core at which the intermediate pressure compressor 14 is located, and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by a suitable interconnecting shaft.

Other gas turbine engines to which the technology described herein may be applied may have alternative configurations. By way of example such engines may have an alternative number of air flows, interconnecting shafts (e.g. two) and/or an alternative number of compressors and/or turbines. Further the engine may comprise a gearbox provided in the drive train from a turbine to a compressor and/or fan.

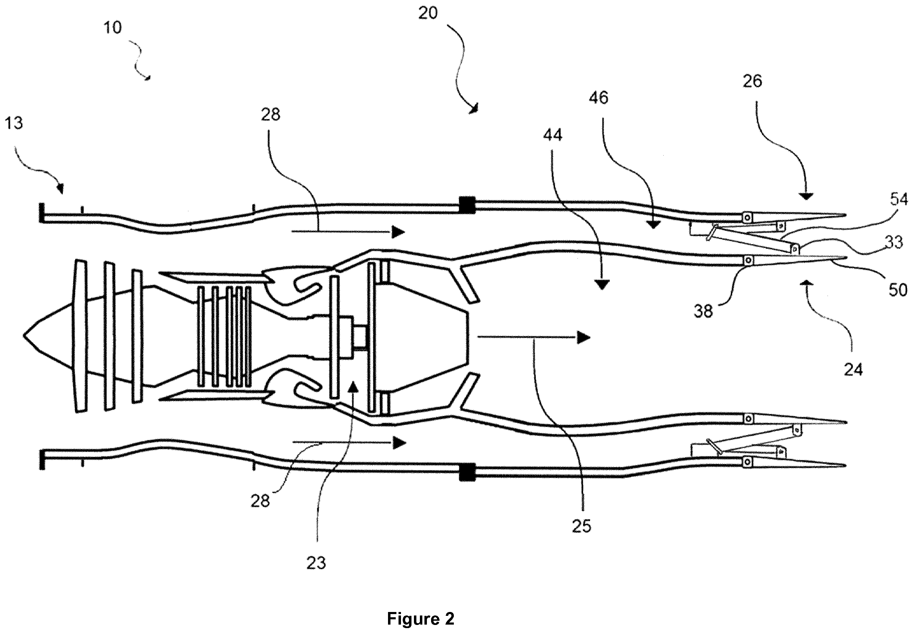

**Figure 2** illustrates a gas turbine engine 10 having features corresponding to those described with respect to Figure 1. The gas turbine engine 10 of Figure 2 has a variable area exhaust nozzle 20.

As can be seen in Figure 2, air entering the intake is compressed by the fan 13 to produce two air flows: a first (pressurised) air flow 25 into the engine core 23 (that includes the intermediate pressure compressor 14 of Figure 1, for example); and a second air flow 28 of bypass air that is passed around the engine core 23.

The nozzle 20 is coupled to the engine core 23, and the nozzle 20 includes an internal, primary nozzle 24 and an external, secondary nozzle 26. The primary nozzle 24 is arranged to adjust the first air flow 25 of core air. The secondary nozzle 26 cooperates with the primary nozzle 24 to adjust the second air flow 28 of bypass air. The nozzle 20 illustratively includes a primary passageway 44 and a secondary passageway 46 in addition to the primary and secondary nozzles 24, 26, as shown in Figure 2. The first air flow 25 is conducted through the primary nozzle 24 via the primary passageway 44. The second air flow 28 is conducted through the secondary nozzle 26 via the secondary passageway 46. By controlling the flow of air through and around the engine core 23, the air flow nozzles 24, 26 adjust (or trim) the operating point of the gas turbine engine 10.

The primary nozzle 24 includes a flap 50 and an actuator (or strut) 54 connected to the flap 50 by an actuator connector 33 (which is connected to or forms the backbone of the flap 50). The flap 50 is mounted to pivot relative to a static wall of the engine, and in some cases relative to another flap (not shown), via a pivot connector 38. The actuator 54 is configured to pivot the flap 50 to adjust the primary air flow outlet area. Adjustment of the outlet area via the actuator 54 adjusts the first air flow 25that passes through the primary nozzle 24. Additionally, because the secondary passageway 46 is partially defined by flap 50, adjustment of the outlet area adjusts the secondary passageway 46 and the second airflow 28 that passes through the secondary passageway 46.

In one example, the actuator 54 may be embodied as, or otherwise include, a hydraulically-operated actuator such as a hydraulic piston. In another example, the actuator 54 may be embodied as, or otherwise include, an electrically-powered actuator such as an electrically-powered linear actuator.

It will be appreciated that secondary passageway 46 (which receives bypass air flow 28) will be exposed to a much cooler environment than that in the primary passageway 44 (which receives high pressure exhaust gas from air flow 25) on the other side (the flowpath surface side) of the primary nozzle 24. The temperature differential can cause distortion and can lead to premature wear fatigue (and thus failure) of the primary nozzle 24. For example, the temperature differential may cause any seals formed between flap 50 and various connectors (such as the actuator and pivot connectors 33, 38) to fail.

It will be appreciated that while in the arrangement of Figure 2, there are two airflows and corresponding passageways 44 and 46, this is not required. There may be only a single passageway for receiving one or more air flows, or more than two passageways (and corresponding air flows), as desired.

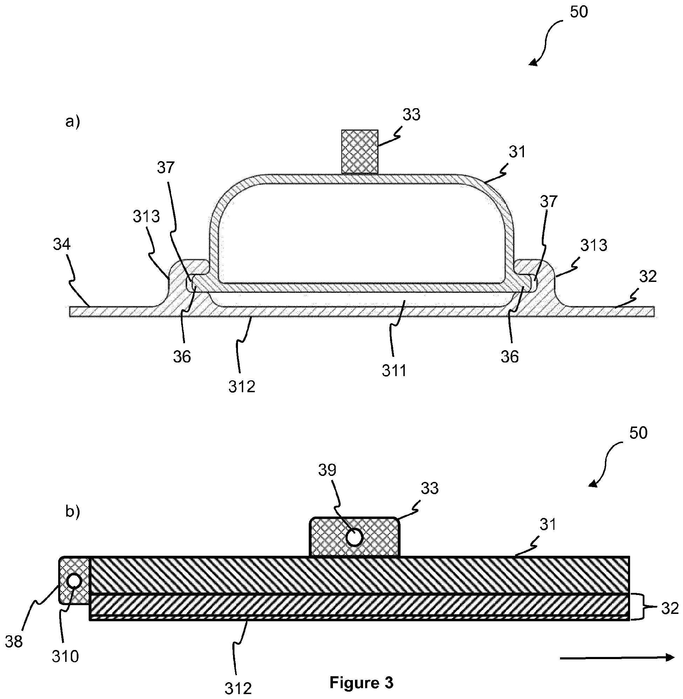

**Figure 3** shows a flap 50 in accordance with an embodiment of the present disclosure. In particular, Figure 3a shows a cross-sectional view of the flap 50 along a transverse direction, while Figure 3b shows a side view along the longitudinal direction of the flap 50.

With reference to both Figure 3a and Figure 3b, the flap 50 may comprise a support structure 31 and a gas shield 32. The support structure 31 supports the weight of the gas shield 32 attached thereto.

It can be seen in Figure 3 that the support structure includes the actuator connector 33 for securing the actuator (or strut) 54 to the flap 50. In the illustrated example of Figure 3b, the actuator connector 33 is in the form of a tab or protrusion extending from the support structure 31 and having a hole 39 extending therethrough in the transverse direction. The hole 39 is suitable for receiving a corresponding connector of the actuator 54 (not shown).

The flap 50, particularly the support structure 31 of the flap 50, includes a pivot connector 38 (with hole 310) to be connected to a corresponding connector on a static wall of the engine (not shown) or on a separate flap (not shown) of the nozzle 24.

It will be appreciated that any suitable connector can be used instead of the actuator connector 33 and pivot connector 38 shown in figure 3, and the type of connectors used will depend on the type of connectors used on the actuator 54, the static wall of the engine or on the separate flap (not shown) of the nozzle 24.

The gas shield 32 is primarily in the shape of a panel or sheet having a flowpath side 312 which will be exposed (during operation) to the hot exhaust gas in passageway 44, and a shielded surface 34 exposed to the relatively colder air flow 28 in passageway 46. The gas shield will therefore serve to shield the support structure 31 (and any other associated elements) from the high temperature exhaust gases in passageway 44.

The gas shield 32 is retained to the support structure 31 by tongue and groove pairs extending along a longitudinal direction of the flap 50 (as denoted by the arrow in Figure 3).

In particular, the gas shield 32 includes two protrusions 313 extending from a substantially planar surface of the gas shield 32 and defining grooves 37 that substantially face each other in the transverse direction. The grooves may be formed by extrusion or by wire erosion, for example. The support structure 31, meanwhile, includes corresponding tongues (or tabs) 36 extending in opposite directions away from the transverse edges of the support structure 31. As can be seen in Figure 3a, the tongues 36 and grooves 37 correspond to each other in that they are suitably dimensioned for mutual engagement.

The gas shield 32 may be (permanently or removably) connected to the support structure 31 at a first longitudinal end of the gas shield 32 (e.g. the end proximal to the pivot connector 38) and free to move, e.g. slide, at a second longitudinal end opposite to the first end. The gas shield may be secured by a clip or a pin and bolt arrangement (not shown).

The tongue 36 and groove 37 arrangement of Figure 3 is configured such that when the support structure 31 is engaged with the gas shield 32, as shown, the gas shield is (at least partly) restricted in the transverse direction but not the longitudinal direction. This allows (sliding) movement of the gas shield 32 (due to thermal expansion) relative to and along the (tongues 36 of) support structure 31 in the longitudinal direction. For example, the movement of the gas shield 32 will accumulate over the length of the gas seal 32 (in the longitudinal direction) as indicated by the arrow in Figure 3b.

Allowing the (second longitudinal end of the) gas shield 32 to move (substantially freely) along the length of the support structure 31 may help to attenuate the thermal strain experienced by the flap 50 during operation. In particular, the gas shield 32 may thermally expand in a linear direction, thereby minimizing distortion or bowing of the gas shield 32 and support structure 31 and therefore the risk of fractures. Furthermore, the tongue 36 and groove 37 arrangement of Figure 3 decouples the hot and cold sections of the flap 50 assembly, thereby reducing thermal strain on the support structure 31 (and therefore connectors 33, 38). For example, the hot and cold sections of the flap 50 are decoupled in that expansion of the hot gas shield 32 will not in turn cause expansion of the colder support structure 31.

The (main body of the) gas shield 32 in the illustrated embodiment is held away from the support structure 31 to define a gap 311 there between. This may increase the decoupling between the hot and cold parts of the flap 50.

Furthermore the gas shield 32 may be formed from a single, e.g. monolithic, piece. In this way, the flap 50 may have a simpler construction than that of the segmented arrangements of the prior art, while reducing thermal strain. The design is particularly suited to being reworked during overhaul, as only the gas shield 32 would need to be removed and replaced. Further, the overall cost and complexity of the flap 50 is reduced.

It will be appreciated that the support structure 31 may be formed of a material having greater rigidity than that of the gas shield 32.

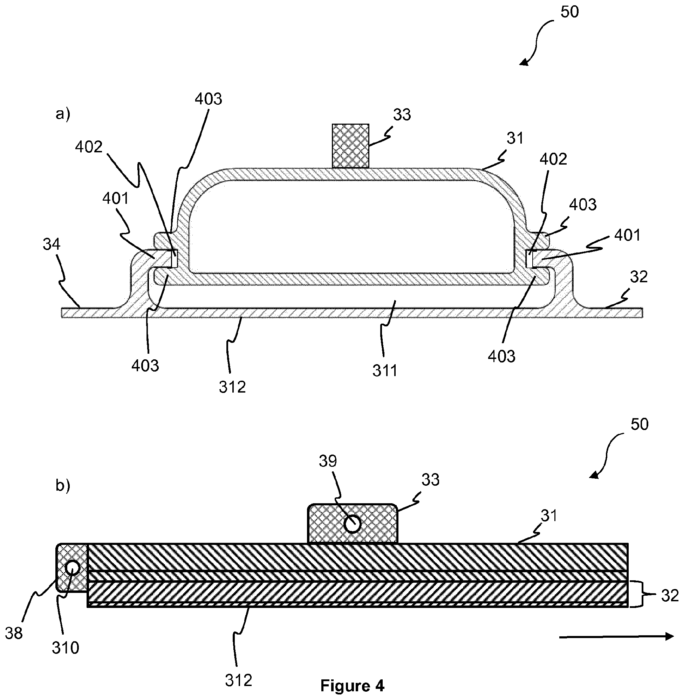

While the example arrangement shown in Figure 3 includes two grooves 37 and two tongues 36 on the gas shield 32 and support structure 31 respectively, this is not required. In other arrangements, the grooves 37 and tongues 36 may be formed on the support structure 31 and gas shield 32, respectively. Such an arrangement will now be described with respect to **Figure 4**.

Figure 4a shows a cross-sectional view of the flap 50 along a transverse direction, while Figure 4b shows a side view along the longitudinal direction of the flap 50. The flap 50 of Figure 4 corresponds substantially to that of Figure 3, except that the grooves and tongues are formed on the support structure 31 and gas shield 32 respectively.

In particular, Figure 4 shows a support structure 31 that includes two protrusions 403 on each transverse side of the support structure 31 to define grooves 402 that face away from each other in the transverse direction. The grooves may be formed by extrusion or by wire erosion, which may reduce the cost of manufacturing the gas shield. The gas shield 32, meanwhile, includes corresponding protrusions 401 defining tongues (or tabs) 401 that extend towards each other in the transverse direction. As can be seen in Figure 4a, the tongues 401 and grooves 402 are suitably dimensioned for mutual engagement.

Similar to the arrangement of Figure 3, the tongue and groove arrangement of Figure 4 is configured such that when the support structure 31 is engaged with the gas shield 32, the gas shield is at least partly restricted in the transverse direction but not the longitudinal direction. This aids movement of the gas shield 32 (due to thermal expansion) relative to and along the (grooves 402 of) support structure 31 in the longitudinal direction. For example, the movement of the gas shield 32 will accumulate over the length of the gas seal 32 (in the longitudinal direction) as indicated by the arrow in Figure 4b.

It will be appreciated that the gas shield 32 and the support structure 31 may include a mixture of one or more grooves and one or more tongues, as appropriate. For example, the gas shield may comprise a tongue for engaging a respective groove of the support structure, and a groove for engaging a respective tongue of the support structure. Further, a respective tongue and/or groove (and corresponding protrusions 313, 401) may extend along some or all of the length of the flap 50. Thus, the tongues 36, 401 and/or grooves 37, 402 (and/or corresponding protrusions 313, 401) may be divided along their length into sections and respective sections may be arranged along the length of the flap 50, as appropriate. This may further reduce thermal stress and strain.

It will be appreciated that although the protrusions 313, 401 on the gas shield 32 is shown in Figures 3 and 4 to be arranged on the outer transverse sides of the support structure 31, this is not required. For example, in other arrangements the protrusions 313, 401 of the gas shield 32 will be arranged on the inner transverse sides of the support structure 31 (not shown).

The tongues 36, 401, grooves 37, 402 and/or protrusions 313, 401 may be insulated to further reduce thermal stress and strain. The insulation may be in the form of ceramic coatings or thermal barrier coatings, for example.

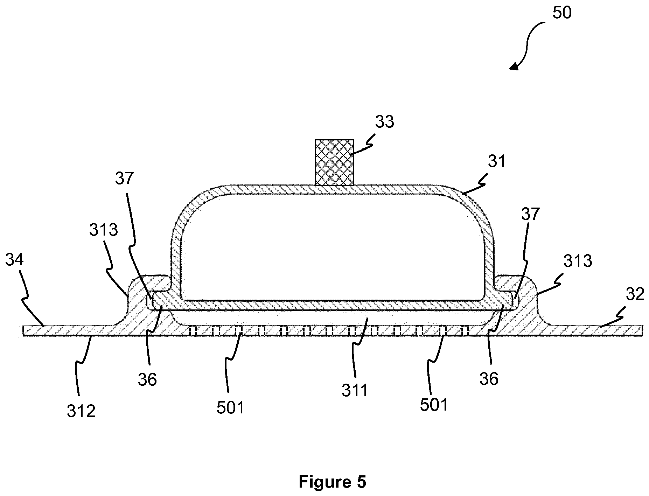

**Figure 5** is a cross-sectional view of a nozzle flap 50 in accordance with a further embodiment of the technology described herein. The nozzle flap 50 of Figure 5 is substantially the same as that illustrated in and described with respect to Figure 3. However, the gas shield 32 of the flap 50 of Figure 5 includes a plurality of cooling holes 501 extending therethrough from a shielded surface 34 of the gas shield 32 to a flowpath surface 312 of the gas shield 32. As can be seen in Figure 5, the cooling holes 501 allow fluid communication between the space 311 and the flowpath surface 312 of the gas shield 32.

In the arrangement of Figure 5, the space 311 is configured to receive cooling fluid, such as a bypass airflow, which will effuse through the cooling holes 501 to form a film of coolant (air) over the flowpath surface 312. This may be advantageous to cool the gas shield 32, thereby reducing the thermal strain on the gas shield 32 and the support structure 31. The cooling fluid may also or instead be provided from within the support structure 31 (e.g. through one or more holes in a surface of the support structure 31).

While the support structure 31 is shown to be hollow in the Figures, this is not required. Further, it will be appreciated that holes may be equally applied to the gas shield of Figure 4.

Additionally, it will be appreciated that although the flaps illustrated in the Figures include tongue and grooves that are in direct contact with one another, this is not required. In some arrangements, there may be one or more bearing elements, such as ball bearings or rolling elements, between the support structure and the gas shield (i.e. between respective tongues and grooves). This may be advantageous to reduce friction and thus wear between the support structure and the gas shield.

It will be understood that the technology described herein is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A flap (50) for a variable area exhaust nozzle (20) of a gas turbine engine (10), comprising a support structure (31) and a gas shield (32) retained thereto;
the support structure (31) and the gas shield (32) comprising a pair of grooves (37, 402) extending in a longitudinal direction of the flap (50) and a pair of corresponding tongues (36, 401) that engage the pair of grooves (37, 402) so as to retain the gas shield (32) to the support structure (31) and to allow movement of the gas shield (32) by thermal expansion along the support structure (31) in the longitudinal direction, wherein one of the gas shield (32) and the support structure (31) defining either grooves (37) or tongues (401) that substantially face each other in the transverse direction, and the corresponding tongues (36) or grooves (402) extending in opposite directions away from the transverse edges of the support structure (31).

2. A flap (50) as claimed in claim 1, wherein the pair of grooves (37) is formed on the gas shield (32) and the pair of corresponding tongues (36) is formed on the support structure (31).

3. A flap (50) as claimed in claim 1, wherein the pair of grooves (402) is formed on the support structure (31) and the pair of corresponding tongues (401) is formed on the gas shield (32).

4. A flap (50) as claimed in any preceding claim, wherein:
the gas shield (32) comprises a first end and a second end which is opposite to the first end in the longitudinal direction;
the first end is secured to the support structure (31); and
the second end is movable by thermal expansion along the support structure (31) in the longitudinal direction.

5. A flap (50) as claimed in claim 4, wherein the gas shield (32) is removably secured to the support structure (31) at the first end.

6. A flap (50) as claimed in any one of the preceding claims, wherein the flap (50) comprises one or more bearings between the support structure (31) and the gas shield (32).

7. A flap (50) as claimed in any one of the preceding claims, wherein the flap (50) comprises one or more ribs connected to the gas shield (32) for increasing the stiffness of the gas shield (32).

8. A flap (50) as claimed in any one of the preceding claims, wherein the gas shield (32) comprises a plurality of cooling holes (501) extending through the gas shield (32) from a shielded surface (34) to a flowpath surface (312), wherein the cooling holes (501) are configured to allow cooling fluid to flow therethrough from the shielded surface (34) of the gas shield (32) to the flowpath surface (312).

9. A flap (50) as claimed in any one of the preceding claims, wherein the gas shield (32) is formed of a single piece of material.

10. A variable area exhaust nozzle (20) for a gas turbine engine (10), comprising a flap (50) as claimed in any one of the preceding claims.

11. A gas turbine engine (10) comprising a flap (50) as claimed in any one of claims 1-9 or a variable area exhaust nozzle (20) as claimed in claim 10.
